# EUROPÄISCHE PATENTSCHRIFT

(11) **EP 2 104 625 B1**
(45) Veröffentlichungstag und Bekanntmachung des Hinweises auf die Patenterteilung: **07.07.2010**
(21) Anmeldenummer: 07817783.9
(22) Anmeldetag: 07.11.2007
(51) Int. Cl.: B62B 3/14

(54) **STAPELBARER EINKAUFSWAGEN**
STACKABLE SHOPPING CART
CHARIOT À PROVISIONS EMPILABLE

(30) Priorität: 16.11.2006 DE 102006054153
(43) Veröffentlichungstag der Anmeldung: 30.09.2009
(73) Patentinhaber: Eberlein, Herbert, 89347 Bubesheim (DE)
(72) Erfinder: Eberlein, Herbert, 89347 Bubesheim (DE)
(86) Internationale Anmeldenummer: PCT/DE2007/001995
(87) Internationale Veröffentlichungsnummer: WO 2008/058509

(56) Entgegenhaltungen:
- DE-U1- 20 318 769
- DE-U1- 29 907 769
- FR-A- 1 346 649
- US-A1- 2003 116 933
- US-B1- 6 676 139

## Beschreibung

Die Erfindung betrifft einen mit gleichen Einkaufswagen stapelbaren Einkaufswagen gemäß dem Oberbegriff von Anspruch 1. Die DE 20 318 769 U1 zeigt einen derartigen stapelbaren Einkaufswagen.

Einkaufswagen dieser Art stellen den größten Anteil aller zum Stand der Technik zählenden Einkaufswagen dar. Die eingangs genannte Art der Befestigung des Korbes auf dem Fahrgestell hat sich bewährt. Trotzdem weisen diese Einkaufswagen einen nicht zu unterschätzenden Nachteil auf, der darin besteht, dass sich die Korbbreite an der Breite des Fahrgestelles und umgekehrt die Breite des Fahrgestelles an der Breite des Korbes orientiert. Die Konsequenz ist, dass für jede Korbbreite ein entsprechend breites Fahrgestell erforderlich ist, was inzwischen in nachteiliger Weise zu einer Vielzahl von unterschiedlichen Körben und Fahrgestellen geführt hat, mit der weiteren Folge einer ausufernden und daher kostenintensiven Lagerhaltung.

Es ist Aufgabe der Erfindung, einen Einkaufswagen der hier vorliegenden Art so weiter zu entwickeln, dass der eben beschriebene Mißstand vermeidbar ist.

Die Lösung der Aufgabe erfolgt gemäß Anspruch 1. Bevorzugte Ausführungsformen sind in den Unteransprüchen definiert.

Im Gegensatz zum Stand der Technik weicht die vorliegende Erfindung in zweckmäßiger Weise von der bisherigen Lösung ab, die Korbtragelemente als hochkant angeordnete, aus Flachstahl oder aus starkem Blech gefertigte Stege zu gestalten. Anstelle der ebenflächigen Korbtragelemente treten nun solche mit seitenversetzter oder auch abgewinkelter Form, die es zusammen mit den paarweise mindestens zwei vorbestimmten Verbindungsstellen in äußerst zweckmäßiger Weise ermöglichen, auf ein und dasselbe Fahrgestell wenigstens zwei unterschiedlich breite Körbe aufzusetzen. So ist es beispielsweise möglich, auf das gleiche Fahrgestell einmal einen Korb aufzusetzen, der breiter ist als das Fahrgestell oder aber einen Korb aufzusetzen, der beispielsweise gleich breit ist wie das Fahrgestell oder sich sogar weniger breit als das Fahrgestell dimensionieren lässt. Auf diese Weise lassen sich all jene Fahrgestelle einsparen, die sich bisher nur durch ihre unterschiedliche Breite unterscheiden, in Länge und Höhe aber gleich sind. Durch, die Erfindung wird somit die Artenvielfalt der Fahrgestelle vermindert und dadurch eine ausufernde Lagerhaltung vermieden. So ist es möglich, gleiche Fahrgestelle entsprechend der vorgeschlagenen Erfindung in wesentlich größeren Stückzahlen zu fertigen, was sich in niedrigeren Herstellkosten bemerkbar macht.

Die Erfindung wird anhand von Ausführungsbeispielen näher erläutert Es zeigt
- Fig. 1: einen Einkaufswagen in räumlicher Darstellung;
- Fig. 2: den gleichen Einkaufswagen in einer Rückansicht mit unterschiedlich breiten Körben sowie
- Fig. 3: ebenfalls in einer Rückansicht eine zweckmäßige Anordnung der Verbindungsstellenpaare am Fahrgestell.

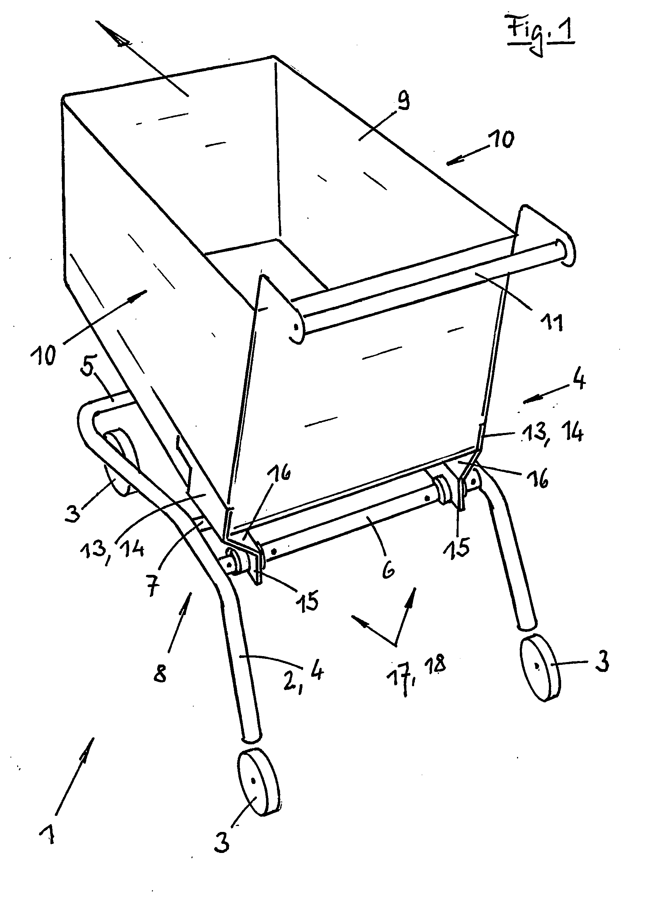

Der in Fig. 1 dargestellte Einkaufswagen 1 orientiert sich in seiner äußeren Gestalt an den handelsüblichen Einkaufswagen 1. Der Einkaufswagen 1 weist ein von Rollen 3 getragenes Fahrgestell 2 auf. Im Beispiel besitzt das Fahrgestell 2 zwei nach oben gekrümmte Längsholme 4, die durch eine vordere Querstrebe 5 und durch einen hinteren und einen vorderen Quersteg 6 und 7 verbunden sind, wobei letztere sich im oberen Bereich 8 der Längsholme 4 befinden. Nahe der beiden Längsholme 4 sind am hinteren und am vorderen Quersteg 6, 7, also am Fahrgestell 2, zwei Korbtragelemente 13 angeordnet, die sich in Schieberichtung (Pfeil) des Einkaufswagens 1 erstrecken. Das Fahrgestell 2 trägt einen Korb 9 mit einer Schiebeeinrichtung 11, wobei der Korb 9 mit Hilfe seiner beiden Seitenwände 10 an je einem Korbtragelement 13 befestigt ist. Der Einkaufswagen 1 ist in bekannter Weise so gestaltet, dass dieser sich in ebenfalls bekannter Weise in einen gleichen Einkaufswagen 1 platzsparend einschieben, also mit diesem stapeln lässt. Dies wird bekanntermaßen durch eine konische Gestaltung des Fahrgestelles 2 und des Korbes 9 und unter Berücksichtigung einer die Rückseite des Korbes 9 verschließenden, nicht näher dargestellten schwenkbaren Klappe ermöglicht.

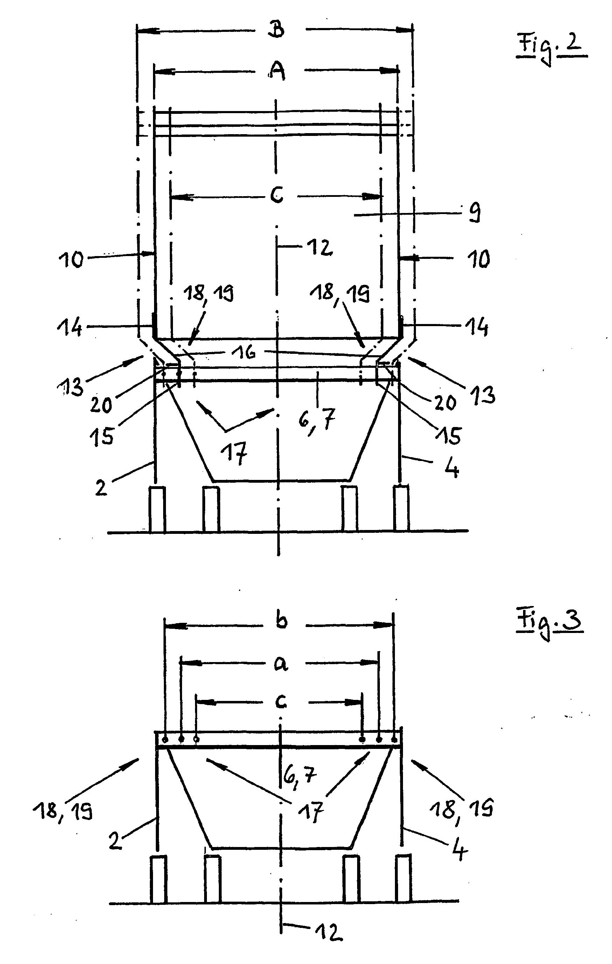

Fig. 2 zeigt den in Fig. 1 dargestellten Einkaufswagen 1 in einer Rückansicht. Man erkennt das Fahrgestell 2, die beiden Korbtragelemente 13 und den Korb 9. Erkennbar sind ferner die nahezu deckungsgleichen Querstege 6 und 7, auf welchen die beiden Korbtragelemente 13, gegen Lösen gesichert, angeordnet sind. Es sind drei verschieden breite Körbe 9 eingezeichnet. Der mit Volllinien gezeichnete Korb 9 ist im Beispiel so breit wie das Fahrgestell 2. Mit strichpunktierten Linien ist jeweils ein breiter als das Fahrgestell 2 gestalteter und ein schmäler als das Fahrgestell 2 ausgebildeter Korb 9 dargestellt. Die Maße A, B und C verdeutlichen dies. Entsprechend sind auch die beiden Korbtragelemente 13 eingezeichnet. Die beiden Korbtragelemente 13 sind jeweils zur senkrechten Mittelachse 12 des Einkaufswagens 1 spiegelbildlich angeordnet und gestaltet. Die Korbtragelemente 13 sind im Gegensatz zum Stand der Technik seitenversetzt ausgebildet. Je ein oberer Stützabschnitt 14 der Korbtragelemente 13 ist mit einer Seitenwand 10 des entsprechenden Korbes 9 verbunden. Seitenversetzt zum oberen Stützabschnitt 14 besitzt jedes Korbtragelement 13 einen unteren Stützabschnitt 15. An den Querstegen 6, 7 sind Verbindungsstellenpaare 17 vorgesehen, an welchen sich die Korbtragelemente 13 mit ihrem unteren Stützabschnitt 15 arretieren lassen. Bei jedem der beiden Korbtragelemente 13 ist der obere Stützabschnitt 14 mit dem unteren Stützabschnitt 15 über einen zur senkrechten Mittelachse 12 des Einkaufswagens 1 weisenden, bevorzugt schräg abfallenden Verbindungsabschnitt 16 verbunden. Die schräge Anordnung der Verbindungsabschnitte 16 vermeidet das Ablagern von Schmutz. Da die Korbtragelemente 13 in unterschiedlichen, der jeweiligen Breite eines Korbes 9 angepassten Positionen am Fahrgestell 2 befestigbar sind, ist es möglich, bei ein und demselben Fahrgestell 2 und unter Verwendung der immer gleichen Korbtragelemente 13 Einkaufswagen 1 mit unterschiedlich breiten Körben 9 herzustellen. Es bietet sich an, die Korbtragelemente 13 aus stabilem Kunststoff zu gestalten, die auf die vorbestimmten Verbindungsstellenpaare 17 gegen Lösen gesichert aufsetzbar sind. Es sind mindestens zwei Verbindungsstellenpaare 17 vorgesehen. Im Beispiel sind es drei Verbindungsstellenpaare 17, wobei jedes Verbindungsstellenpaar 17 mindestens einen Quersteg 6 oder 7, in der Regel beide Querstege 6, 7 beansprucht.
Jedes Verbindungsstellenpaar 17 wird somit bevorzugt durch je zwei Verbindungsstellen 18 gebildet, wobei sich die jeweils erste Verbindungsstelle 18 am hinteren Quersteg 6 und die jeweils zweite Verbindungsstelle 18 am vorderen Quersteg 7 befindet. Je nach Breite des Korbes 9 wird somit das passende Verbindungsstellenpaar 17 zum Befestigen der Korbtragelemente 13 gewählt. Zum weiteren Stützen der Korbtragelemente 13 können diese mit einer Schulter 20 ausgestattet sein, die sich, von der Mittelachse 12 nach außen wegragend, am Fahrgestell 2, insbesondere am Quersteg 6 und/oder am Quersteg 7 abstützt.

Fig. 3 zeigt den gleichen Einkaufswagen 1, ebenfalls in einer Rückansicht, jedoch ohne Korb 9. Es sind paarweise drei Verbindungsstellenpaare 17 erkennbar. Ihre jeweils spiegelbildliche Anordnung ist durch die Maße a, b und c gekennzeichnet. Die unterschiedlich gestaltbaren Verbindungsstellenpaare 17 sind im Beispiel symbolhaft durch Löcher 19 oder Bohrungen 19 gebildet, die sich im hinteren und im vorderen Quersteg 6, 7 befinden. Die erforderlichen Korbtragelemente 13 lassen sich, sofern diese aus Kunststoff gefertigt sind, unter Inanspruchnahme eines ausgewählten Verbindungsstellenpaares 17 und unter Inanspruchnahme der passenden Löcher oder Bohrungen 19 schnappschlüssig auf die beiden Querstege 6, 7 aufsetzen. Je nach Inanspruchnahme der unterschiedlich breit angeordneten Verbindungsstellenpaare 17 ist es möglich, mit immer den gleichen Korbtragelementen 13 unterschiedlich breite Körbe 9 auf ein und dasselbe Fahrgestell 2 aufzusetzen. Zusammen mit Fig. 2 ist ersichtlich, dass die Breite eines jeden Korbes 9, z. B. die Breite A, größer ist als der horizontal gemessene Abstand a beim entsprechend passenden Verbindungsstellenpaar 17. So ist deshalb B auch größer als b und C ebenfalls größer als c. Die Verbindungsstellenpaare 17 sind zwischen den Längsholmen 4 des Fahrgestelles 2 angeordnet, wobei zu erwähnen bleibt, dass anstelle der gezeigten Längsholme 4 anderweitig gestaltete und bekannte Träger vorgesehen sein können, die den Korb 9 stützen. Der Begriff Längsholme 4 schließt ausdrücklich solche zum Stand der Technik zählende Träger mit ein.

Die Korbtragelemente 13 können verschiedenartig ausgebildet sein. Man wird sie bevorzugt spiegelbildlich gestalteten. Es gibt pro Einkaufswagen 1 gewöhnlich ein rechtes und ein linkes Korbtragelement 13. Wie bereits erwähnt, bietet sich zur Herstellung der Korbtragelemente 13 Kunststoff an. Es sind jedoch auch aus Metall gefertigte, beispielsweise aus Druckguss gebildete Korbtragelemente 13 möglich, wobei allen die seitenversetzte Grundform gemeinsam ist. Die Korbtragelemente (13) lassen sich im Zuge eines Montagevorganges lösbar am Fahrgestell 2 befestigen, was bei Bedarf auch eine leichte Demontage ermöglicht.

## Patentansprüche

1. Stapelbarer Einkaufswagen (1), mit einem Fahrgestell (2), das Längsholme (4) aufweist, mit einem Korb (9) und mit einer Schiebeeinrichtung (11), wobei das Fahrgestell (2) mindestens ein Verbindungsstellenpaar (17) aufweist, das zwei Korbtragelemente (13) trägt, an welchen der Korb (9) mit Hilfe seiner beiden Seitenwände (10) befestigt ist und wobei jedes Korbtragelement (13) einen oberen Stützabschnitt (14) zum Befestigen einer Seitenwand (10) aufweist und mit einem zum oberen Stützabschnitt (14) seitenversetzt angeordneten unteren Stützabschnitt (15) zum Arretieren am Verbindungsstellenpaar (17) ausgestattet ist, **dadurch gekennzeichnet, dass** am Fahrgestell (2) mindestens zwei unterschiedlich breite Verbindungsstellenpaare (17) vorgesehen sind, sodass die Korbtragelemente (13) in unterschiedlichen, der jeweiligen Breite eines Korbes (9) angepassten Positionen am dazu passenden Verbindungsstellenpaar (17) befestigbar sind.

2. Stapelbarer Einkaufswagen nach Anspruch 1, **dadurch gekennzeichnet, dass** die Verbindungsstellenpaare (17) zwischen den Längsholmen (4) des Fahrgestelles (2) angeordnet sind.

3. Stapelbarer Einkaufswagen nach Anspruch 1, **dadurch gekennzeichnet, dass** jedes Verbindungsstellenpaar (17) mindestens einen Quersteg (6 oder 7) oder zwei Querstege (6, 7) beansprucht.

4. Stapelbarer Einkaufswagen nach Anspruch 1, **dadurch gekennzeichnet, dass** die Breite des jeweiligen Korbes größer ist als der Abstand des entsprechenden Verbindungsstellenpaares (17).

5. Stapelbarer Einkaufswagen nach Anspruch 1, **dadurch gekennzeichnet, dass** jedes Korbtragelement (13) mit einer Schulter (20) ausgestattet ist, die zum weiteren Abstützen der Korbtragelemente (13) auf einem Quersteg (6 und/oder 7) bestimmt ist.

6. Stapelbarer Einkaufswagen nach Anspruch 1, **dadurch gekennzeichnet, dass** die Korbtragelemente (13) aus Kunststoff oder aus Metall gefertigt sind.

## Claims

1. Stackable shopping cart (1), provided with a chassis (2) which has longitudinal arms (4), with a basket (9) and with a pushing device (11), the chassis (2) having at least one connecting point pair (17) which carries two basket-carrying elements (13), and the basket (9) can be fastened by way of its two side walls (10) to said basket-carrying elements and each basket-carrying element (13) having an upper supporting portion (14) to fasten a side wall (10) and is equipped with a lower supporting portion (15) to lock in place on the connecting point pair (17) and which is arranged with a lateral offset with respect to the upper supporting portion (14), **characterized in that** at least two connecting point pairs (17) of different widths are provided on the chassis (2), so that the basket-carrying elements (13) can be fastened in different positions adapted to the respective width of a basket (9) onto the appropriate connecting point pair (17).

2. Stackable shopping cart according to Claim 1, **characterized in that** the connecting point pairs (17) are arranged between the longitudinal arms (4) of the chassis (2).

3. Stackable shopping cart according to Claim 1, **characterized in that** each connecting point pair (17) requires at least one crossbar (6 or 7) or two crossbars (6, 7).

4. Stackable shopping cart according to Claim 1, **characterized in that** the width of the respective basket is greater than the distance between the corresponding connecting point pair (17).

5. Stackable shopping cart according to claim 1, **characterized in that** each basket-carrying element (13) is equipped with a shoulder (20) which is intended for additionally supporting the basket-carrying elements (13) on a crossbar (6 and/or 7).

6. Stackable shopping cart according to Claim 1, **characterized in that** the basket-carrying elements (13) are made of plastic or metal.

## Revendications

1. Chariot à provisions empilable (1), avec un châssis (2), qui présente des longerons (4), avec un panier (9) et avec un dispositif de poussée (11), le châssis (2) présentant au moins une paire de points de connexion (17), qui porte deux éléments de support de panier (13), sur lesquels le panier (9) est fixé à l'aide de ses deux parois latérales (10), chaque élément de support de panier (13) présentant une portion de support supérieure (14) pour la fixation d'une paroi latérale (10), et étant muni d'une portion de support inférieure (15) disposée de manière décalée latéralement par rapport à la portion de support supérieure (14), pour réaliser le blocage au niveau de la paire de points de connexion (17), **caractérisé en ce qu'**au moins deux paires de points de connexion (17) de largeur différente sont prévus sur le châssis (2), de sorte que les éléments de support de panier (13) puissent être fixés dans différentes positions adaptées à la largeur respective d'un panier (9) sur la paire de points de connexion (17) correspondante.

2. Chariot à provisions empilable selon la revendication 1, **caractérisé en ce que** les paires de points de connexion (17) sont disposées entre les longerons (4) du châssis (2).

3. Chariot à provisions empilable selon la revendication 1, **caractérisé en ce que** chaque paire de points de connexion (17) sollicite au moins une traverse (6 ou 7) ou deux traverses (6, 7).

4. Chariot à provisions empilable selon la revendication 1, **caractérisé en ce que** la largeur de chaque panier est supérieure à la distance de la paire de points de connexion correspondante (17).

5. Chariot à provisions empilable selon la revendication 1, **caractérisé en ce que** chaque élément de support de panier (13) est muni d'un épaulement (20), qui est prévu pour supporter de manière supplémentaire les éléments de support de panier (13) sur une traverse (6 ou 7).

6. Chariot à provisions empilable selon la revendication 1, **caractérisé en ce que** les éléments de support de panier (13) sont fabriqués en plastique ou en métal.
